# EUROPEAN PATENT SPECIFICATION

(11) **EP 2 789 732 B1**
(45) Date of publication and mention of the grant of the patent: **27.06.2018**
(21) Application number: 12871231.2
(22) Date of filing: 10.08.2012
(51) Int. Cl.: D06M 11/46, C03C 25/10, C03C 25/48, D02G 3/18, D02G 3/40, D03D 15/00, D03D 15/12, D06M 15/248, D06M 23/08, D03D 1/00, D02G 3/44

(54) **Resin-coated flame-retardant glass fiber bundle and resin-coated flame-retardant fiber woven fabric**
Feuerbeständiges harzbeschichtetes Glasfaserbündel und feuerbeständiges harzbeschichtetes Fasergewebe
Faisceau de fibres de verre ignifuge revetue de resine et tissu tissé en fibre ignifuge revêtue de résine

(30) Priority: 16.03.2012 JP 2012061017
(43) Date of publication of application: 15.10.2014
(73) Proprietor: Nitto Boseki Co., Ltd, Fukushima-shi, Fukushima 960-8161 (JP)
(72) Inventor: HIBI, Sousuke, Fukushima-shi Fukushima 960-8581 (JP); OKADO, Saori, Fukushima-shi Fukushima 960-8581 (JP)
(74) Representative: Schön, Christoph
(86) International application number: PCT/JP2012/070554
(87) International publication number: WO 2013/136552

(56) References cited:
- JP-A- 2003 073 149
- JP-A- 2003 293 262
- JP-A- 2005 206 993
- JP-A- 2006 233 139
- JP-A- 2007 295 858
- JP-A- 2008 196 085

## Description

### Technical Field

The present invention relates to a resin-coated flame-retardant glass fiber bundle and a resin-coated flame-retardant glass fiber woven fabric.

### Background Art

Resin-coated flame-retardant fiber woven fabrics formed by weaving resin-coated flame-retardant fiber yarns, particularly resin-coated glass fiber woven fabrics formed by weaving resin-coated glass fiber bundles, have been known as membrane materials used for tent warehouses, medium- or large-sized tents, truck hoods, sunshade tents and the like, and as blinds heretofore. As the resin-coated glass fiber bundle, that which comprises a first resin coating layer coating a glass fiber bundle and a second resin coating layer formed on the first resin coating layer and is typically colored wholly or partially along the longitudinal direction of the glass fiber bundle with a pigment contained in the second resin coating layer has been known (for example, see Patent Literature 1).

On the other hand, a membrane material comprising a resin layer which coats a base fabric and contains titanium dioxide particles having a weight average particle diameter of 0.6-1.5 µm and mica particles has been known (for example, see Patent Literature 2). The membrane material is said to have an excellent translucency with a visible light transmittance of 10-20% and have an excellent thermal insulation performance.

### Patent Literature

Patent Literature 1: Japanese Patent Laid-Open No. 2007-70749
Patent Literature 2: Japanese Patent Laid-Open No. 2009-279814

JP 2003 293262 A discloses a method for producing a titanium dioxide-loaded glass fiber equipped with the glass fiber and a titanium oxide-containing layer formed on the glass fiber, which method comprises a step of attaching a mixed liquid containing the titanium dioxide, an inorganic binder and water on the glass fiber to obtain a mixed liquid-attached glass fiber, a step of cooling the mixed liquid-attached glass fiber for freezing the mixed liquid while attaching with the glass fiber to obtain a frozen material-attached glass fiber, and a step of freeze-drying the frozen material-attached glass fiber.

JP 2005 206993 A discloses a surface-treated glass cloth obtained by weaving glass fibers which glass cloth has a mixed thin film containing 0.1-10.0 mass% of titanium oxide super fine paticles having an average primary particle diameter of 1-100 nm and/or the titanium oxide super fine particles having another metal oxide on its surface layer and a 0.01-3.0 mass% of silane-coupling agent expressed by the following general formula (1) based on the glass fiber. The general formula (1):X(R)₃₋ₙSiYₙ wherein X is an organic functional group having at least one group selected from a group consisting of amino, an unsaturated double bond, epoxy and mercapto; Y is an alkoxy; (n) is an integer of ≥1 and ≤3; and R is an alkyl and/or an aromatic group.

JP 2003 073149 A discloses a binder for glass fiber containing a film forming agent selected at least from starch and polyvinyl alcohol, titanium dioxide particles, a lubricant, and water.

JP 2008 196085 A discloses a natural fiber-like mesh sheet having excellent heat-shielding property produced by using a base cloth using a coarse-mesh woven or knit fabric composed of fiber yarn containing a staple spun yarn having surface fluffs, and impregnating or coating the base cloth with a heat-shielding layer containing a thermoplastic resin and 1-30 mass% amorphous metal oxide particles having a particle diameter distribution range of 0.3-3.0 µm and an aspect ratio of 1.0-3.0 at a ratio of 20-60 mass% based on the total mass of the base cloth and the heat-shielding layer.

JP 2006 233139 A discloses a sheet capable of reflecting sunlight comprising a synthetic resin and at least two types of titanium oxide fine particles having different particle diameters, wherein the sheet has a reflectivity of ≥75% and an absorption factor of ≤10% over the entire wavelength region of wavelengths of 500 - 1500 nm.

JP 2007 295858 A discloses an agricultural coating material comprising at least a single-layer thermoplastic resin film, wherein the agricultural coating material is provided with a coating film applied to at least one surface of the film, wherein the coating film contains the titanium oxide having a weight average particle diameter of 0.6-1.5 µm in its composition.

### Summary of Invention

### Technical Problem

However, the conventional resin-coated flame-retardant glass fiber woven fabric cannot have both sufficient thermal insulation performance and translucency. due to the low thermal insulation performance of the pigment typically contained in the second resin coating layer for coloring although the woven fabric could have a translucency by weaving the flame-retardant glass fiber bundles so as to have openings. Particularly, when large openings are adopted in order to enhance the translucency, the area of the woven fabric containing the pigment is decreased, thereby reducing the thermal insulation performance.

With respect to the method in which the base fabric is coated with the resin layer containing titanium dioxide particles and mica particles, there has existed a problem of deteriorated air permeability because of coverage of the openings existing in the woven fabric by the resin layer.

In the method in which the base fabric is coated with the resin layer, there has also existed a problem that it is difficult to fabricate woven fabrics varied in design comparing with the resin-coated flame-retardant glass fiber woven fabrics which are capable of adopting the warp and woof having different color tones to each other and capable of suitably selecting a texture pattern, and also it is difficult to fabricate wide variety of woven fabrics upon fabrication of woven fabrics having both decorativeness and practicability such as blinds.

Thus, it has been desired to develop a resin-coated flame-retardant glass fiber woven fabric having both translucency and thermal insulation performance by adding the titanium dioxide particles in the resin coating layer in the conventional resin-coated flame-retardant glass fiber bundle. According to an investigation by the present inventors, however, the titanium dioxide particle content in the second resin coating layer should be increased in order to obtain sufficient thermal insulation performance in the resin-coated flame-retardant glass fiber woven fabric formed by weaving the resin-coated flame-retardant glass fiber bundle. This leads to an inconvenience that weaving performance of the resin-coated flame-retardant glass fiber bundle is deteriorated and sufficient translucency cannot be obtained in the resin-coated flame-retardant glass fiber woven fabric.

An object of the present invention is to provide resin-coated flame-retardant glass fiber bundle capable of solving such inconvenience so as to have excellent weaving performance and to give both excellent translucency and thermal insulation performance to the woven fabric formed by weaving the yarns.

Another object of the present invention is to provide a resin-coated flame-retardant glass fiber woven fabric having both excellent translucency and thermal insulation performance.

### Solution to Problem

In order to achieve such purposes, resin-coated flame-retardant glass fiber bundle of the present invention comprises a first resin coating layer and a second resin coating layer, both of them coating a flame-retardant glass fiber bundle, wherein the flame-retardant glass fiber bundle is present in an amount of 20-50 mass% based on the total mass of the resin-coated flame-retardant glass fiber bundle, wherein the first resin coating layer bonds the flame-retardant glass fiber bundle and the second resin coating layer and is free of titanium dioxide particles, and the second resin coating layer contains titanium dioxide particles and is formed on the first resin coating layer, wherein the second resin coating layer comprises the titanium dioxide particles in a range of 4-12 mass% based on a total mass of the resin-coated flame-retardant glass fiber bundle, and wherein the titanium dioxide particles consist of first particles having a number average particle diameter in a range of 0.6-1.5 µm and second particles having a number average particle diameter in a range of 0.2-0.4 µm in a mass ratio of the first particles/second particles in a range of 80/20-89/11.

As a result, the resin-coated flame-retardant glass fiber bundle of the present invention can obtain excellent weaving performance and can give excellent translucency and thermal insulation performance to the resin-coated flame-retardant glass fiber woven fabric formed by weaving the resin-coated flame-retardant glass fiber bundles.

When the titanium dioxide particle content in the resin coating layer is less than 4 mass% based on the total mass of the resin-coated flame-retardant glass fiber bundle, the resin-coated flame-retardant glass fiber woven fabric formed by weaving the resin-coated flame-retardant glass fiber bundles cannot obtain sufficient thermal insulation performance. When the titanium dioxide particle content exceeds 12 mass% based on the total mass of the resin-coated flame-retardant glass fiber bundle, on the other hand, the resin-coated flame-retardant glass fiber bundle has deteriorated weaving performance, and the resin-coated flame-retardant glass fiber bundle cannot be obtained efficiently while maintaining a good appearance.

Among the titanium dioxide particles, the first particles having a relatively larger particle diameter have a function to efficiently shield infrared rays in the incident light in the resin-coated flame-retardant glass fiber woven fabric. The larger the ratio of the first particles based on the total amount of the titanium dioxide particles is, the more the thermal insulation performance can be enhanced as indicated by the solar shading coefficient of the resin-coated flame-retardant glass fiber woven fabric, however, the translucency is lowered as indicated with a visible light transmittance.

Among the titanium dioxide particles, on the other hand, the second particles having a relatively smaller particle diameter have a function to efficiently scatter visible rays in the incident light in the resin-coated flame-retardant glass fiber woven fabric. Thus, in the resin-coated glass fiber woven fabric, the translucency can be adjusted without lowering the thermal insulation performance thereof by employing the second particles together with the first particles in the mass ratio in the range described above.

When the mass ratio of the first particles and second particles (first particles/second particles) is less than 6/4, the first particle content is too small to obtain sufficient thermal insulation performance. When the mass ratio of the first particles and second particles (first particles/second particles) exceeds 9/1, on the other hand, the first particle content is too large to obtain sufficient translucency. At the same time, the resin-coated flame-retardant glass fiber bundle has deteriorated weaving performance, whereby the resin-coated flame-retardant glass fiber woven fabric cannot be obtained efficiently while maintaining a good appearance thereof

In the resin-coated flame-retardant glass fiber bundleof the present invention, glass fiber is used from the viewpoint of strength. Particularly, a glass fiber bundle is noninflammable, has a low linear expansion coefficient and, therefore, excellent dimensional stability, and is easily available. Accordingly, a resin-coated glass fiber woven fabric formed by weaving the resin-coated glass fiber bundles has excellent dimensional stability, thereby being suitable for building material applications such as blinds which are used under an environment imposing prolonged exposure to heating by solar radiation and require thermal insulation performance and translucency.

The resin-coated glass fiber bundle of the present invention preferably has a knot strength in a range of 7.4 N or more or preferably has a friction strength in a range of 50 times or more. As a result, the resin-coated glass fiber bundle of the present invention can obtain excellent weaving performance. When the knot strength is less than 7.4 N and the friction strength is less than 50 times, on the other hand, the resin-coated glass fiber bundle has poor weaving performance, whereby it is difficult to obtain the resin-coated glass fiber woven fabric efficiently while maintaining a good appearance thereof

The knot strength is defined as a value shown as a tensile strength determined conforming to JIS R 3420 for the resin-coated glass fiber bundle with one knot made as a thread knot. The friction strength is defined as the number of reciprocation cycles until the resin-coated glass fiber bundle is broken when it has a weight of 100 g attached to one end thereof and is hung on a stainless steel bar having a diameter of I mm and then subjected to repeated vertical reciprocation.

In the resin-coated flame-retardant glass fiber bundle of the present invention, the resin coating layer thereof comprises a first resin coating layer coating the flame-retardant glass fiber bundle and free of the titanium dioxide particles and a second resin coating layer containing the titanium dioxide particles and formed on the first resin coating layer. Adhesiveness between the flame-retardant glass fiber bundle and second resin coating layer can be enhanced by selecting a resin which is a material capable of enhancing the adhesiveness between the second resin coating layer and flame-retardant glass fiber bundle as the first resin coating layer. Particularly when inorganic fiber such as a glass fiber bundle is employed as the flame-retardant fiber yarn, adhesiveness thereof to the resin coating layer is not high enough. In this case, adhesiveness between the flame-retardant glass fiber bundle and second resin coating layer can be enhanced by arranging the first resin coating layer between the flame-retardant glass fiber bundle and second resin coating layer such that excellent weaving performance can be obtained.

The titanium dioxide particles are not necessary to be added in the first resin coating layer since sufficient thermal insulation performance can be obtained by introducing the titanium dioxide particles into the second resin coating layer which is the external layer. In addition, it is preferable for the first resin coating layer not to contain the titanium dioxide particles also from the viewpoint of enhancing the adhesiveness between the second resin coating layer and flame-retardant glass fiber bundle.

A resin-coated flame-retardant glass fiber woven fabric of the present invention is formed by weaving the resin-coated flame-retardant glass fiber bundles of the present invention used as the warp and woof. The resin-coated flame-retardant glass fiber woven fabric of the present invention can have both excellent translucency and thermal insulation performance since the woven fabric is formed by weaving the resin-coated flame-retardant glass fiber bundles of the present invention used as the warp and woof

The resin-coated flame-retardant glass fiber woven fabric of the present invention can obtain more excellent translucency when the woven fabric has a visible light transmittance in a range of 9-18%. The resin-coated flame-retardant glass fiber woven fabric of the present invention can obtain more excellent thermal insulation performance when the woven fabric has a solar shading coefficient in a range of 0.150 or less. The solar shading coefficient is an index of thermal insulation performance and can be determined by a method conforming to JIS R 3106. The visible light transmittance is an index of translucency and can be determined by a method conforming to JIS R 3106. U-4000 type self-recording spectrophotometer (produced by Hitachi High-Technologies Corp.), for example, can be used for determination of the solar shading coefficient and visible light transmittance.
The resin-coated flame-retardant glass fiber woven fabric of the present invention is a resin-coated glass fiber woven fabric in which a glass fiber bundle is employed as the flame-retardant glass fiber bundle. Since the glass fiber bundle is noninflammable, has a low linear expansion coefficient and, therefore, excellent dimensional stability, and is easily available, the resin-coated glass fiber woven fabric is particularly suitable for building material applications such as blinds which require thermal insulation performance and translucency.

### Brief Description of Drawings

FIG. 1 is an illustrative cross section showing a constitution of resin-coated flame-retardant glass fiber bundle of the present invention.
FIG. 2 is a perspective view showing a constitution of resin-coated flame-retardant glass fiber woven fabric of the present invention.

### Description of Embodiments

Embodiments of the present invention will be described below in more details referring to the accompanying drawings.

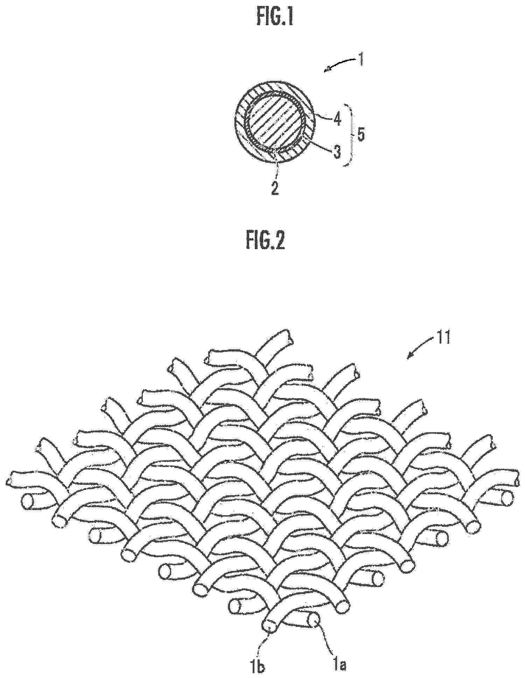

As shown in FIG. 1, resin-coated flame-retardant glass fiber bundle 1 of the present embodiment comprises a resin coating layer 5 coating flame-retardant glass fiber bundle 2. The resin coating layer 5 preferably comprises a first resin coating layer 3 and second resin coating layer 4 formed on the first resin coating layer 3 as shown in FIG. 1. The resin coating layer 5, more specifically the second resin coating layer 4, comprises titanium dioxide particles therein in a range of 4-12 mass% based on the total mass of the resin-coated flame-retardant fiber yarn 1, and the titanium dioxide particles consists of first particles having the number average particle diameter in a range of 0.6-1.5 µm and second particles having the number average particle diameter in a range of 0.2-0.4 µm. The ratio of the first particles and second particles, as a mass ratio of the first particles/second particles, ranges 80/20 - 89/11.

The resin-coated flame-retardant glass fiber bundle 1 has a knot strength in a range of 7.4 N or more. The knot strength is defined as a value shown as a tensile strength determined conforming to JIS R 3420 for the resin-coated glass fiber bundle with one knot made as a thread knot. The resin-coated glass fiber bundle has a friction strength of 50 times or more. The friction strength is defined as the number of reciprocation cycles until the resin-coated glass fiber bundle is broken when it has a weight of 100 g attached to one end thereof and is hung on a stainless steel bar having a diameter of 1 mm and then subjected to repeated vertical reciprocation.

As shown in FIG. 2, a resin-coated flame-retardant glass fiber woven fabric 11 of the present embodiment can be obtained by weaving the resin-coated flame-retardant glass fiber bundles 1 used as the warp 1a and woof 1b. The resin-coated flame-retardant glass fiber woven fabric 11 has a visible light transmittance in a range of 9-18% as an index of translucency and solar shading coefficient in a range of 0.150 or less as an index of thermal insulation performance, and thus has excellent translucency and thermal insulation performance.

For use for building material application such as blinds, it is preferred to employ a flame-retardant fiber woven fabric from the viewpoint of fire safety. When the resin-coated flame-retardant glass fiber bundle of the present invention, in which flame-retardant glass fiber bundle is employed in the core part, is used as the flame-retardant glass fiber woven fabric, a glass fiber woven fabric combining flame resistance, translucency, and thermal insulation performance can be obtained. A glass fiber woven fabric having fire safety can be fabricated by employing, as the flame-retardant glass fiber bundle used for the present invention, noninflammable inorganic fiber or organic fiber having LOI (Limited Oxygen Index), conforming to a flame retardance test method JIS K 7201 A-1 method, of 26 or more.

The flame-retardant glass fiber bundle used for the present invention preferably has a linear expansion coefficient of from -7 x 10⁻⁶/K to 7 x 10⁻⁶/K. This is because a resin-coated flame-retardant glass fiber woven fabric, which has excellent dimensional stability thereby being suitable for use under an environment imposing prolonged exposure to heating by solar radiation such as blind application, can be obtained by use of the flame-retardant glass fiber bundle having the linear expansion coefficient in the range described above. As the flame-retardant glass fiber bundle used for the present invention, a glass fiber bundle is particularly suitable because of non-inflammability, excellent dimensional stability due to a low linear expansion coefficient, and easy availability thereof.

The flame-retardant glass fiber bundle 2 preferably has a mass of 10-80 tex for use of the resin-coated flame-retardant glass fiber woven fabric for building material application, particularly blind application. The flame-retardant glass fiber bundle is used in an amount corresponding to 20-50 mass%, preferably 25-45 mass% based on the total mass of the resin-coated flame-retardant glass fiber bundle 1 in order to attain a combination of a satisfactory mechanical strength, excellent appearance and excellent thermal insulation performance.

According to the present invention the mass of the glass fiber bundle preferably corresponds to 25-45 mass% based on the total mass of the resin-coated glass fiber bundle in order to attain a combination of a satisfactory mechanical strength, excellent appearance and excellent thermal insulation performance. In addition, when the mass of the glass fiber bundle ranges 30-40 mass% based on the total mass of the resin-coated glass fiber bundle, a more satisfactory mechanical strength can be obtained. The glass fiber bundle has been formed by bunching 200-1600 glass filaments having a diameter of 3-9 µm and preferably has a mass of 20-70 tex. The glass fiber bundle is preferably that made from E-glass from the viewpoint of availability and preferably that made from T-glass from the viewpoint of mechanical strength and dimensional stability against heat. Linear expansion coefficients are 5.6 x 10⁻⁶/K for E-glass and 2.8 x 10⁻⁶/K for T-glass, for reference.

The second resin coating layer 4 contains the titanium dioxide particles, and thereby the resin-coated flame-retardant fiber woven fabric 11 can provide excellent translucency and thermal insulation performance. The second resin coating layer 4 is preferably formed with a resin composition selected from the group consisting of a vinyl chloride resin composition, vinyl chloride-vinyl acetate copolymer resin composition, ethylene- vinyl acetate copolymer resin composition, polyethylene resin composition and polypropylene resin composition, and is particularly preferably formed with a vinyl chloride resin composition because of excellent weather resistance and antifouling property thereof. The vinyl chloride resin composition may comprise various additives such as plasticizers, flame retardants and surfactants in addition to the vinyl chloride resin and comprises 30 mass% or more, preferably 40 mass% or more of the vinyl chloride resin.

According to the present invention, adhesiveness between the vinyl chloride resin composition which is suitably employed as the second resin coating layer and glass fiber bundle is not sufficient enough. Thus, a first resin coating layer 3 is preferably arranged to enhance the adhesiveness between the glass fiber bundle and the second resin coating layer. The first resin coating layer 3 is preferably formed with a vinyl chloride-vinyl acetate copolymer resin because of excellent adhesiveness thereof to the vinyl chloride resin composition used as the second resin coating layer. Preferably, the first resin coating layer 3 does not contain the titanium dioxide particles in order to enhance the adhesiveness thereof to the flame-retardant fiber yarn 2. In addition, the first resin coating layer 3 is preferably a transparent resin coating layer not containing a pigment.

When the resin coating layer 5, particularly the second resin coating layer 4 which has larger contact area with the incident light, contains the titanium dioxide particles in a range of 4-12 mass% based on the total mass of the resin-coated flame-retardant glass fiber bundle 1, the resin-coated flame-retardant glass fiber bundle 1 can obtain excellent weaving performance and the resin-coated flame-retardant glass fiber woven fabric 11 can obtain excellent translucency and thermal insulation performance. All the titanium oxide particles contained in the resin coating layer are contained within the second resin coating layer.

The content of the titanium dioxide particles preferably ranges 8-11 mass%, more preferably 8.5-10 mass%, and particularly preferably 9-9.5 mass% based on the total mass of the resin-coated flame-retardant glass fiber bundle 1 in order to obtain excellent weaving performance, as well as excellent translucency and thermal insulation performance.

Furthermore, the content of the titanium dioxide particles preferably ranges 8-11 mass% based on the total mass of the resin-coated flame-retardant glass fiber bundle 1 and 15-40 mass% based on the mass of the flame-retardant glass fiber bundle 2 in the resin-coated flame-retardant glass fiber bundle 1 in order to obtain excellent weaving performance, as well as excellent translucency and thermal insulation performance. The content of the titanium dioxide particles more preferably ranges 8.5-10 mass% based on the total mass of the resin-coated flame-retardant fiber yarn 1 and 18-35 mass% based on the mass of the flame-retardant fiber yarn 2. The content of the titanium dioxide particles particularly preferably ranges 9-9.5 mass% based on the total mass of the resin-coated flame-retardant fiber yarn 1 and 20-33 mass% based on the mass of the fame-retardant fiber yarn 2.

Particularly in the case of the resin-coated glass fiber bundle, the content of the titanium dioxide particles preferably ranges 8-11 mass% based on the total mass of the resin-coated glass fiber bundle in order to provide excellent weaving performance, as well as excellent translucency and solar shading performance. In addition, the content of the titanium dioxide particles preferably ranges 8.5-10 mass% since it is possible to have excellent translucency and solar shading performance, as well as an excellent yarn strength. Furthermore, the content of the titanium dioxide particles in a range of 9-9.5 mass% is more preferred since the solar shading coefficient becomes 0.125 or less and it is possible to have excellent shading performance in this case.

The content of the titanium dioxide particles preferably ranges 8-11 mass% based on the total mass of the resin-coated glass fiber bundle and 20-35 mass%) based on the mass of the glass fiber bundle in the resin-coated glass fiber bundle for obtaining excellent weaving performance. In addition, with respect to the weaving performance, the content of the titanium dioxide particles more preferably ranges 8.5-10 mass% based on the total mass of the resin-coated glass fiber bundle and 23-30 mass% based on the mass of the glass fiber bundle, and further, particularly preferably ranges 9-9.5 mass% based on the total mass of the resin-coated glass fiber bundle and 25-28 mass% based on the mass of the glass fiber bundle.

When the titanium dioxide particles consist of first particles having the number average particle diameter in a range of 0.6-1.5 µm and second particles having the number average particle diameter in a range of 0.2-0.4 µm, and the ratio of the first particles and second particles, as a mass ratio of the first particles/second particles, ranges80/20 - 89/11, the resin-coated flame-retardant fiber woven fabric 11 can have excellent translucency and thermal insulation performance. As the first particles, titanium dioxide particles having the number average particle diameter of 0.8-1.2 µm is preferably employed from the viewpoint of availability.

The ratio of the first particles and second particles, as a mass ratio of the first particles/ second particles, ranges 80/20-89/11, preferably 85/15-88/12 in order to obtain the excellent translucency and thermal insulation performance in the resin-coated flame-retardant fiber woven fabric 11.

Upon fabrication of the resin-coated flame-retardant glass fiber bundle 1 of the present embodiment, a first resin solution containing a resin to form the first resin coating layer 3 is first applied to the flame-retardant glass fiber bundle 2, and then the excessive first resin solution is squeezed, followed by heating to form the first resin coating layer 3. Subsequently, a second resin solution containing a resin to form the second resin coating layer 4 is applied to the flame-retardant glass fiber bundle 2 coated with the first resin coating layer 3, and then the excessive second resin solution is squeezed, followed by heating to form the second resin coating layer 4.

In the second resin solution, the titanium dioxide particles comprising the first particles and second particles are homogeneously dispersed together with the resin to form the second resin coating layer 4. In addition, the second resin solution may further comprises additives such as plasticizers, flame retardants, dispersants, oils and fats, stabilizers, surfactants, and pigments.

The resin-coated flame-retardant glass fiber woven fabric 11 can be formed by weaving the resin-coated flame-retardant glass fiber bundles 1 used as the warp 1a and woof 1b using a loom such as Rapier loom and can be used as various membrane materials employed for tents and the like and blinds. The blinds comprising the resin-coated flame-retardant glass fiber woven fabric 11 are particularly useful as the application of the resin-coated flame-retardant glass fiber woven fabric 11 because of combination of excellent translucency and excellent thermal insulation performance thereof.

The resin-coated flame-retardant glass fiber woven fabric 11 has a weaving density for the warp of 25-70/25 mm and weaving density for the woof of 15-60/25 mm and porosity of 1-35%, for example. The resin-coated flame-retardant glass fiber woven fabric 11 preferably has the weaving density for the warp of 40-60/25 mm and weaving density for the woof of 30-45/25 mm and porosity of 1-15% in order to combine excellent translucency, excellent thermal insulation performance and a satisfactory mechanical strength. In addition, the resin-coated flame-retardant glass fiber woven fabric 11 preferably has, for example, a mass per unit area of 250-700 g/m². The porosity can be calculated by calculating a ratio of an area occupied by the resin-coated glass fiber bundles per unit area in the resin-coated flame-retardant glass fiber woven fabric as a percentage, followed by subtracting the ratio from 100.

Examples and Comparative Examples will be described below.

### Examples

### [Example 1]

In this Example, 400 glass filaments having a diameter of 7 µm made from E-glass were bunched to prepare a glass fiber bundle having a mass of 45.0 tex as a flame-retardant fiber yarn 2 at first. Then, the glass fiber bundle was continuously passed through a vessel containing a first resin solution while the glass fiber bundle being conveyed at a rate of 250 m/min to impregnate the glass fiber bundle with the first resin solution. The first resin solution had been prepared by mixing 42.3 parts by mass of vinyl chloride-vinyl acetate copolymer resin (trade name: Kanevilack L-EY. produced by Kaneka Corp.) in 160 parts by mass of acetone as a solvent.

Then, the glass fiber bundle impregnated with the first resin solution was passed through a die to squeeze the excessive first resin solution, followed by heating at 300°C for 3 seconds to obtain a glass fiber bundle coated with a first resin coating layer 3.

Then, the glass fiber bundle was continuously passed through a vessel containing a second resin solution while the glass fiber bundle coated with the first resin coating layer 3 being conveyed at a rate of 250 m/min to impregnate the glass fiber bundle coated with the first resin coating layer 3 with the second resin solution. The second resin solution comprised 85.8 mass% of a vinyl chloride resin composition consisting of 110 parts by mass of a vinyl chloride resin (trade name: ZEST P21, produced by Shin Dai-ichi Vinyl Corp.) and 100 parts by mass of additives including a plasticizer, surfactant, pigment and the like and, as titanium dioxide particles, 12.3 mass% of first particles having a number average particle diameter of 1.0 µm (trade name: JR-1000, produced by Tayca Corp.) and 1.9 mass% of second particles having a number average particle diameter of 0.3 µm (contained in trade name: 1005, produced by Nikko Bics Co., Ltd.).

Then, the glass fiber bundle coated with the first resin coating layer 3 and impregnated with the second resin solution was passed through a die to squeeze the excessive second resin solution, followed by heating so as to make mass thereof 129 tex. In this way, a resin-coated glass fiber bundle was obtained in which the second resin coating layer 4 was formed on the first resin coating layer 3 (corresponding to the resin-coated flame-retardant fiber yarn 1). The composition of the resin-coated glass fiber bundle obtained in this Example is shown in Table 1.

Then, a knot strength, friction strength and weaving performance were evaluated for the resin-coated glass fiber bundle obtained in this Example.

The knot strength is defined as a value shown as a tensile strength determined conforming to JIS R 3420 for the resin-coated glass fiber bundle with one knot made as a thread knot. The friction strength is defined as the number of reciprocation cycles until the resin-coated glass fiber bundle of approximately 50 cm in length is broken when it has a weight of 100 g attached to one end thereof and is hung on a stainless steel bar having a diameter of 1 mm and then subjected to repeated vertical reciprocation. The weaving performance was evaluated in a manner where a case in which frequency of yarn scission per 5 m was one time or more was defined as "Poor" and a case in which the frequency was less than one time was defined as "Good" during weaving a resin-coated glass fiber bundle on a Rapier loom at a number of rotation of 200 rpm. These results are shown in Table 2.

Then, the resin-coated glass fiber bundle obtained in this Example was subjected to plain weaving as the warp 1a and woof 1b under the conditions of warp weaving density of 42/25 mm and woof weaving density of 42/25 mm to obtain a resin-coated glass fiber woven fabric (corresponding to the resin-coated flame-retardant glass fiber woven fabric 11). The resin-coated glass fiber woven fabric obtained in this Example had a porosity of 11%.

Then, a solar shading coefficient, visible light transmittance and tear strength were evaluated for the resin-coated glass fiber woven fabric obtained in this Example.

The solar shading coefficient is an index of thermal insulation performance and was evaluated by a method conforming to JIS R 3106. The visible light transmittance is an index of translucency and was evaluated by a method conforming to JIS R 3106. The solar shading coefficient and visible light transmittance were determined using U-4000 type self-recording spectrophotometer manufactured by Hitachi High-Technologies Corp. The tear strength was evaluated by a method conforming to JIS L 1096 C method. These results are shown in Table 2.

### [Example 2]

In this Example, a resin-coated glass fiber bundle was fabricated in the same way as in Example 1 except that the ratio of the vinyl chloride resin composition and two kinds of the titanium dioxide particles in the second resin solution to form the second resin coating layer was changed. The ratio of the vinyl chloride resin composition and two kinds of the titanium dioxide used for the second resin coating layer was 86.8 mass% for the vinyl chloride resin composition and, as titanium dioxide, 11.3 mass% for the first particles and 1.9 mass% for the second particles. The composition of the resin-coated glass fiber bundle obtained in this Example is shown in Table 1.

Then, the knot strength, friction strength and weaving performance were evaluated for the resin-coated glass fiber bundle obtained in this Example in the same way as in Example 1. These results are shown in Table 2.

Then, a resin-coated glass fiber woven fabric was obtained in the same way as in Example 1 except that the resin-coated glass fiber bundle obtained in this Example was used. The resin-coated glass fiber woven fabric obtained in this Example had a porosity of 11%.

Then, a solar shading coefficient, visible light transmittance and tear strength were evaluated for the resin-coated glass fiber woven fabric obtained in this Example in quite the same way as in Example 1. These results are shown in Table 2.

### [Example 3]

In this Example, a resin-coated glass fiber bundle was fabricated in the same way as in Example 1 except that the ratio of the vinyl chloride resin composition and two kinds of the titanium dioxide particles in the second resin solution to form the second resin coating layer was changed. The ratio of the vinyl chloride resin composition and two kinds of the titanium dioxide used for the second resin coating layer was 83.6 mass% for the vinyl chloride resin composition and, as titanium dioxide, 14.6 mass% for the first particles and 1.8 mass% for the second particles. The composition of the resin-coated glass fiber bundle obtained in this Example is shown in Table 1.

Then, the knot strength, friction strength and weaving performance were evaluated for the resin-coated glass fiber bundle obtained in this Example in the same way as in Example 1. These results are shown in Table 2.

Then, a resin-coated glass fiber woven fabric was obtained in the same way as in Example 1 except that the resin-coated glass fiber bundle obtained in this Example was used. The resin-coated glass fiber woven fabric obtained in this Example had a porosity of 11%.

Then, a solar shading coefficient, visible light transmittance and tear strength were evaluated for the resin-coated glass fiber woven fabric obtained in this Example in the same way as in Example 1. These results are shown in Table 2.

### [Example 4]

In this Example, a resin-coated glass fiber bundle was fabricated in the same way as in Example 1 except that the ratio of the vinyl chloride resin composition and two kinds of the titanium dioxide particles in the second resin solution to form the second resin coating layer was changed. The ratio of the vinyl chloride resin composition and two kinds of the titanium dioxide used for the second resin coating layer was 90.1 mass% for the vinyl chloride resin composition and, as titanium dioxide, 7.9 mass% for the first particles and 2.0 mass% for the second particles. The composition of the resin-coated glass fiber bundle obtained in this Example is shown in Table 1.

Then, the knot strength, friction strength and weaving performance were evaluated for the resin-coated glass fiber bundle obtained in this Example in the same way as in Example 1. These results are shown in Table 2.

Then, a resin-coated glass fiber woven fabric was obtained in the same way as in Example 1 except that the resin-coated glass fiber bundle obtained in this Example was used. The resin-coated glass fiber woven fabric obtained in this Example had a porosity of 11%.

Then, a solar shading coefficient, visible light transmittance and tear strength were evaluated for the resin-coated glass fiber woven fabric obtained in this Example in the same way as in Example 1. These results are shown in Table 2.

### [Comparative Example 1]

In this Comparative Example, a resin-coated glass fiber bundle was fabricated in the same way as in Example 1 except that the ratio of the vinyl chloride resin composition and two kinds of the titanium dioxide particles in the second resin solution to form the second resin coating layer was changed. The ratio of the vinyl chloride resin composition and two kinds of the titanium dioxide used for the second resin coating layer was 80.6 mass% for the vinyl chloride resin composition and, as titanium dioxide, 17.6 mass% for the first particules and 1.8 mass% for the second particles. The composition of the resin-coated glass fiber bundle obtained in this Comparative Example is shown in Table 1.

Then, the knot strength, friction strength and weaving performance were evaluated for the resin-coated glass fiber bundle obtained in this Comparative Example in the same way as in Example 1. These results are shown in Table 2.

Then, a resin-coated glass fiber woven fabric was obtained in the same way as in Example 1 except that the resin-coated glass fiber bundle obtained in this Comparative Example was used. The resin-coated glass fiber woven fabric obtained in this Comparative Example had a porosity of 11%.

Then, a solar shading coefficient, visible light transmittance and tear strength were evaluated for the resin-coated glass fiber woven fabric obtained in this Comparative Example in the same way as in Example 1. These results are shown in Table 2.

### [Comparative Example 2]

In this Comparative Example, a resin-coated glass fiber bundle was fabricated in the same way as in Example 1 except that the second resin solution to form the second resin coating layer was composed of the vinyl chloride resin composition and the second titanium dioxide particles without the first titanium dioxide particles. The ratio of the vinyl chloride resin composition and second titanium dioxide used for the second resin coating layer was 98.6 mass% for the vinyl chloride resin composition and, as titanium dioxide, 1.4 mass% for the second particles. The composition of the resin-coated glass fiber bundle obtained in the Comparative Example is shown in Table 1.

Then, the knot strength, friction strength and weaving performance were evaluated for the resin-coated glass fiber bundle obtained in this Comparative Example in the same way as in Example 1. These results are shown in Table 2.

Then, a resin-coated glass fiber woven fabric was obtained in the same way as in Example 1 except that the resin-coated glass fiber bundle obtained in this Comparative Example was used. The resin-coated glass fiber woven fabric obtained in this Comparative Example had a porosity of 11%.

Then, a solar shading coefficient, visible light transmittance and tear strength were evaluated for the resin-coated glass fiber woven fabric obtained in this Comparative Example in the same way as in Example 1. These results are shown in Table 2.

**[Table 1]**

| | Composition of resin-coated glass fiber bundle (mass%) | | | | | | Mass ratio of first particles/second particles (A/B) |
|---|---|---|---|---|---|---|---|
| | Glass fiber bundle. | First translucent resin coating layer | Second translucent resin coating layer | | | | |
| | | | Vinyl chloride resin composition (solid content) | Titanium dioxide particles | | | |
| | | | | First particles (A) | Second particles (B) | Total (A+B) | |
| Example 1 | 34.9 | 0.1 | 55.8 | 8.0 | 1.2 | 9.2 | 80/12 |
| Example 2 | 34.9 | 0.1 | 56.5 | 7.3 | 1.2 | 8.5 | 73/12 |
| Example 3 | 34.9 | 0.1 | 54.3 | 9.5 | 1.2 | 10.7 | 95/12 |
| Example 4 | 34.9 | 0.1 | 58.6 | 5.1 | 1.3 | 6.4 | 51/13 |
| Comparative Example 1 | 34.9 | 0.1 | 52.4 | 11.4 | 1.2 | 12.6 | 114/12 |
| Comparative Example 2 | 34.9 | 0.1 | 64.1 | 0 | 0.9 | 0.9 | - |

**[Table 2]**

| | Resin-coated glass fiber bundle | | | Resin-coated glass fiber woven fabric | | |
|---|---|---|---|---|---|---|
| | Knot strength (N) | Friction strength (times) | Weaving performance | Solar shading coefficient | Visible light transmittance (%) | Tear strength (N) |
| Example 1 | 7.61 | 60 | Good | 0.121 | 9.3 | >35 |
| Example 2 | 7.61 | 63 | Good | 0.131 | 10.6 | >35 |
| Example 3 | 7.43 | 55 | Good | 0.127 | 9.3 | >35 |
| Example 4 | 7.75 | 58 | Good | 0.148 | 13.9 | >35 |
| Comparative Example 1 | 7.18 | 43 | Poor | 0.131 | 9.5 | >35 |
| Comparative Example 2 | 7.93 | 80 | Good | 0.157 | 14.5 | >35 |

It is apparent from the results shown in Tables 1 and 2 that the resin-coated glass fiber bundles of Examples 1-4, in which each content of titanium dioxide particles in the second resin coating layer 4 ranges 4-12 mass% based on the total mass of the resin-coated glass fiber bundle and each mass ratio of the first particles and second particles, first particles/second particles, ranges 80/20 - 89/11, have knot strengths of 7.4 N or more, the friction strengths of 50 times or more, and excellent weaving performance.

It is also apparent that the resin-coated glass fiber woven fabrics obtained by weaving the resin-coated glass fiber bundles of Examples 1-4 have solar shading coefficients of 0.150 or less, thereby having excellent thermal insulation performance and have visible light transmittances ranging 9-18%, thereby having excellent translucency, and further have tear strengths exceeding 35 N, whereby the woven fabrics can be suitably used for blinds.

It is apparent that the resin-coated glass fiber bundle of Comparative Example 1, in which the titanium dioxide particle content in the second resin coating layer 4 is 12.6 mass% based on the total mass of the resin-coated glass fiber bundle and the mass ratio of the first particles and second particles, first particles/second particles, is 114/12, being larger than 9/1, has a knot strength of 7.18 N and friction strength of 43 times, whereby the resin-coated glass fiber bundle has, compared with the resin-coated glass fiber bundles of Examples 1-4, difficulty in weaving.

It is also apparent that the resin-coated glass fiber bundle of Comparative Example 2, in which the titanium dioxide particles contained in the second resin coating layer 4 does not comprise the first particles at all, in spite of the satisfactory weaving performance thereof, cannot give sufficient thermal insulation performance to the resin-coated glass fiber woven fabric obtained by weaving the resin-coated glass fiber bundles, which has a solar shading coefficient exceeding 0.150, comparing with the resin-coated glass fiber bundles of Examples 1-4.

### Reference Signs List

1: Resin-coated flame-retardant glass fiber bundle, 2: Flame-retardant glass fiber bundle, 3: First resin coating layer, 4: Second resin coating layer, 5: Resin coating layer, 11: Resin-coated flame-retardant glass fiber woven fabric.

## Claims

1. A resin-coated flame-retardant glass fiber bundle, said resin-coated flame-retardant glass fiber bundle comprising a first resin coating layer and a second resin coating layer, both of them coating a flame-retardant glass fiber bundle, wherein the flame-retardant fiber glass bundle is present in an amount of 20 - 50 mass% based on the total mass of the resin-coated flame-retardant glass fiber bundle,
wherein the first resin coating layer bonds the flame-retardant glass fiber bundle and the second resin coating layer and is free of titanium dioxide particles, and the second resin coating layer contains titanium dioxide particles and is formed on the first resin coating layer,
wherein the second resin coating layer comprises the titanium dioxide particles in a range of 4 - 12 mass% based on a total mass of the resin-coated flame-retardant glass fiber bundle, and
wherein the titanium dioxide particles consist of first particles having a number average particle diameter in a range of 0.6 - 1.5 µm and second particles having a number average particle diameter in a range of 0.2 - 0.4 µm in a mass ratio of the first particles/second particles in a range of 80/20 - 89/11.

2. The resin-coated flame-retardant glass fiber bundle according to claim 1, wherein the flame-retardant glass fiber bundle has a knot strength in a range of 7.4 N or more.

3. The resin-coated flame-retardant glass fiber bundle according to claim 1 or 2,
wherein the flame-retardant glass fiber bundle has a friction strength in a range of 50 times or more, the friction strength being defined as a number of reciprocation cycles until the resin-coated flame-retardant glass fiber bundle is broken when it has a weight of 100 g attached to one end thereof and is hung on a stainless steel bar having a diameter of 1 mm and then subjected to repeated vertical reciprocation.

4. A resin-coated flame-retardant glass fiber woven fabric formed by weaving resin-coated flame-retardant glass fiber bundles used as a warp and woof, wherein said resin-coated flame-retardant glass fiber bundles comprise a first resin coating layer and a second resin coating layer, both of them coating a flame-retardant glass fiber bundle,
wherein the flame-retardant glass fiber bundle is present in an amount of 20 - 50 mass% based on the total mass of the resin-coated flame-retardant glass fiber bundle,
wherein the first resin coating layer bonds the flame-retardant glass fiber bundle and the second resin coating layer and is free of titanium dioxide particles, and the second resin coating layer contains titanium dioxide particles and is formed on the first resin coating layer,
wherein the second resin coating layer comprises the titanium dioxide particles in a range of 4 - 12 mass% based on the total mass of the resin-coated flame-retardant glass fiber bundle, wherein the titanium dioxide particles consist of first particles having a number average particle diameter in a range of 0.6 - 1.5 µm and second particles having a number average particle diameter in a range of 0.2 - 0.4 µm in a mass ratio of the first particles/second particles in a range of 80/20 - 89/11.

5. The resin-coated flame-retardant glass fiber woven fabric according to claim 4, wherein the resin-coated flame-retardant glass fiber woven fabric has a visible light transmittance in a range of 9 - 18%.

6. The resin-coated flame-retardant glass fiber woven fabric according to claim 4 or 5, wherein the resin-coated flame-retardant glass fiber woven fabric has a solar shading coefficient in a range of 0.150 or less.

## Patentansprüche

1. Harzbeschichtetes flammenhemmendes Glasfaserbündel, wobei das harzbeschichtete flammenhemmende Glasfaserbündel eine erste Harzbeschichtungsschicht und eine zweite Harzbeschichtungsschicht umfasst, die beide ein flammenhemmendes Glasfaserbündel beschichten, wobei das flammenhemmende Glasfaserbündel in einer Menge von 20 bis 50 Massenprozent, bezogen auf die Gesamtmasse des harzbeschichteten flammenhemmenden Glasfaserbündels, vorhanden ist,
wobei die erste Harzbeschichtungsschicht das flammenhemmende Glasfaserbündel und die zweite Harzbeschichtungsschicht bindet und frei von Titandioxidpartikeln ist, und die zweite Harzbeschichtungsschicht Titandioxidpartikel enthält und auf der ersten Harzbeschichtungsschicht ausgebildet ist,
wobei die zweite Harzbeschichtungsschicht die Titandioxidpartikel in einem Bereich von 4 bis 12 Massenprozent, bezogen auf die Gesamtmasse des harzbeschichteten flammenhemmenden Glasfaserbündels, umfasst und
wobei die Titandioxidpartikel aus ersten Partikeln, die einen zahlengemittelten Partikeldurchmesser in einem Bereich von 0,6 bis 1,5 µm aufweisen, und zweiten Partikeln, die einen zahlengemittelten Partikeldurchmesser in einem Bereich von 0,2 bis 0,4 µm aufweisen, in einem Massenverhältnis erste Partikel/zweite Partikel in einem Bereich von 80/20 bis 89/11 bestehen.

2. Harzbeschichtetes flammenhemmendes Glasfaserbündel gemäß Anspruch 1, wobei das flammenhemmende Glasfaserbündel eine Knotenfestigkeit in einem Bereich von 7,4 N oder mehr aufweist.

3. Harzbeschichtetes flammenhemmendes Glasfaserbündel gemäß Anspruch 1 oder Anspruch 2, wobei das flammenhemmende Glasfaserbündel eine Reibungsfestigkeit in einem Bereich von 50 Mal oder mehr aufweist, wobei die Reibungsfestigkeit definiert ist als eine Anzahl von Hin- und Her-Bewegungszyklen, bis das harzbeschichtete flammenhemmende Glasfaserbündel zerbricht, wenn ein Gewicht von 100 g an ein Ende hiervon angebracht ist und es an einen Balken aus rostfreiem Stahl mit einem Durchmesser von 1 mm aufgehängt und anschließend wiederholten Hin- und HerBewegungen unterzogen wird.

4. Harzbeschichtetes flammenhemmendes Glasfasergewebe, das durch Weben von harzbeschichteten flammenhemmenden Glasfaserbündeln, die als Kett- und Schussfaden verwendet werden, gebildet wurde, wobei die harzbeschichteten flammenhemmenden Glasfaserbündel eine erste Harzbeschichtungsschicht und eine zweite Harzbeschichtungsschicht umfassen, wobei beide ein flammenhemmendes Glasfaserbündel beschichten,
wobei das flammenhemmende Glasfaserbündel in einer Menge von 20 bis 50 Massenprozent, bezogen auf die Gesamtmasse des harzbeschichteten flammenhemmenden Glasfaserbündels, vorhanden ist,
wobei die erste Harzbeschichtungsschicht das flammenhemmende Glasfaserbündel und die zweite Harzbeschichtungsschicht bindet und frei von Titandioxidpartikeln ist, und die zweite Harzbeschichtungsschicht Titandioxidpartikel enthält und auf der ersten Harzbeschichtungsschicht ausgebildet ist,
wobei die zweite Harzbeschichtungsschicht die Titandioxidpartikel in einem Bereich von 4 bis 12 Massenprozent, bezogen auf die Gesamtmasse des harzbeschichteten flammenhemmenden Glasfaserbündels, umfasst und
wobei die Titandioxidpartikel aus ersten Partikeln, die einen zahlengemittelten Partikeldurchmesser in einem Bereich von 0,6 bis 1,5 µm aufweisen, und zweiten Partikeln, die einen zahlengemittelten Partikeldurchmesser in einem Bereich von 0,2 bis 0,4 µm aufweisen, in einem Massenverhältnis erste Partikel/zweite Partikel in einem Bereich von 80/20 bis 89/11 bestehen.

5. Harzbeschichtetes flammenhemmendes Glasfasergewebe gemäß Anspruch 4, wobei das harzbeschichtete flammenhemmende Glasfasergewebe eine Durchlässigkeit für sichtbares Licht in einem Bereich von 9 bis 18 Prozent aufweist.

6. Harzbeschichtetes flammenhemmendes Glasfasergewebe gemäß Anspruch 4 oder Anspruch 5, wobei das harzbeschichtete flammenhemmende Glasfasergewebe einen Schattierungskoeffizienten in einem Bereich von 0,150 oder weniger aufweist.

## Revendications

1. Faisceau de fibre de verre ignifuge revêtue de résine, ledit faisceau de fibre de verre ignifuge revêtue de résine comprenant une première couche de revêtement de résine et une seconde couche de revêtement de résine, toutes les deux revêtissant un faisceau de fibre de verre ignifuge, où le faisceau de fibre de verre ignifuge est présent en une quantité de 20 à 50 % en masse sur la base de la masse totale du faisceau de fibre de verre ignifuge revêtue de résine,
où la première couche de revêtement de résine se lie au faisceau de fibre de verre ignifuge et la seconde couche de revêtement de résine est exempte de particules de dioxyde de titane, et la seconde couche de revêtement de résine contient des particules de dioxyde de titane et est formée sur la première couche de revêtement de résine,
où la seconde couche de revêtement de résine comprend les particules de dioxyde de titane dans une plage de 4 à 12 % en masse sur la base d'une masse totale du faisceau de fibre de verre ignifuge revêtue de résine, et
où les particules de dioxyde de titane sont constituées des première particules ayant un diamètre de particule moyen en nombre de 0,6 à 1,5 µm et les seconde particules ayant un diamètre de particule moyen en nombre de 0,2 à 0,4 µm dans un rapport en masse des premières particules/secondes particules dans une plage de 80/20 à 89/11.

2. Faisceau de fibre de verre ignifuge revêtue de résine selon la revendication 1, dans lequel le faisceau de fibre de verre ignifuge a une résistance à la tension dans une plage de 7,4 N ou plus.

3. Faisceau de fibre de verre ignifuge revêtue de résine selon la revendication 1 ou 2, dans lequel le faisceau de fibre de verre ignifuge a une résistance au frottement dans une plage de 50 fois ou plus, la résistance au frottement étant définie comme un nombre de cycles pendulaires jusqu'à ce que le faisceau de fibre de verre ignifuge revêtue de résine soit rompu quand il a un poids de 100 g attaché à une de ses extrémités et est suspendu sur une barre en acier inoxydable ayant un diamètre de 1 mm puis soumis à un mouvement pendulaire vertical répété.

4. Tissu tissé de fibre de verre ignifuge revêtue de résine formé en tissant des faisceaux de fibre de verre ignifuge revêtue de résine utilisés comme une chaîne et une trame, dans lequel lesdits faisceaux de fibre de verre ignifuge revêtue de résine comprennent une première couche de revêtement de résine et une seconde couche de revêtement de résine, toutes les deux revêtissant un faisceau de fibre de verre ignifuge,
où le faisceau de fibre de verre ignifuge est présent en une quantité de 20 à 50 % en masse, sur la base de la masse totale du faisceau de fibre de verre ignifuge revêtue de résine,
où la première couche de revêtement de résine se lie au faisceau de fibre de verre ignifuge et la seconde couche de revêtement est exempte de particules de dioxyde de titane et la seconde couche de revêtement de résine contient des particules de dioxyde de titane et est formée sur la première couche de revêtement de résine,
où la seconde couche de revêtement de résine comprend les particules de dioxyde de titane dans une plage de 4 à 12 % en masse sur la base de la masse totale du faisceau de fibre de verre ignifuge revêtue de résine, où les particules de dioxyde de titane sont constituées des première particules ayant un diamètre de particule moyen en nombre de 0,6 à 1,5 µm et les seconde particules ayant un diamètre de particule moyen en nombre de 0,2 à 0,4 µm dans un rapport en masse des premières particules/secondes particules dans une plage de 80/20 à 89/11.

5. Tissu tissé de fibre de verre ignifuge revêtue de résine selon la revendication 4, dans lequel le tissu tissé de fibre de verre ignifuge revêtue de résine a un facteur de transmission de lumière visible dans une plage de 9 à 18 %.

6. Tissu tissé de fibre de verre ignifuge revêtue de résine selon la revendication 4 ou 5, dans lequel le tissu tissé de fibre de verre ignifuge revêtue de résine a un coefficient de protection solaire dans une plage de 0,150 ou moins.
